# EUROPEAN PATENT SPECIFICATION

(11) **EP 0 953 602 B1**
(45) Date of publication and mention of the grant of the patent: **01.10.2003**
(21) Application number: 99107498.0
(22) Date of filing: 30.04.1999
(51) Int. Cl.: C08L 53/00, C08K 5/3435, C08K 5/3492

(54) **Propylene-based resin composition**
Propylenharzzusammensetzung
Composition de résine à base de propylène

(30) Priority: 01.05.1998 JP 13758998
(43) Date of publication of application: 03.11.1999
(73) Proprietor: Japan Polychem Corporation, Tokyo 100-0006 (JP)
(72) Inventor: Sobajima, Yoshihiro c/o Products Res.& Dev. Center, Mie-ken 510-0848 (JP); Hayakawa, Yuu c/o Products Res.& Dev. Center, Mie-ken 510-0848 (JP); Banno, Yoshihiro c/o Products Res.& Dev. Center, Mie-ken 510-0848 (JP)
(74) Representative: Müller-Boré & Partner Patentanwälte

(56) References cited:
- EP-A- 0 791 630
- GB-A- 2 309 973
- GB-A- 2 312 426
- US-A- 5 354 795

## Description

This invention relates to a new propylene-based resin composition, excellent in injection moldability (or injection compression moldability) for molded articles, showing well-balanced properties (in terms of high rigidity, impact strength and surface hardness), excellent in resistance to weather, and, in particular, suitable for a variety of members for industrial devices, particularly interior members for automobiles.

Propylene-based resin compositions have been widely used, because of their excellent moldability, mechanical strength and economic efficiency, for a variety of members for industrial devices, e.g., bumpers, instrument panels, fan shrouds and glove boxes for automobiles, and those for home electric/electronic appliances, e.g., TV sets, VTR's and washing machines.

The above industrial devices are becoming more functional and larger in size, and requiring more functional propylene resin compositions. For example, interior members for automobiles are requiring propylene resin compositions of higher moldability, better-balanced properties (or more concretely, in terms of higher rigidity, impact strength and surface hardness), and higher resistance to weather.

This is because higher moldability (fluidity) brings various improved functions and molding productivity for efficient production of large-size members, while better-balanced properties and higher resistance to weather bring higher durability and resistance to scratching.

It is an object of the present invention to provide a new propylene-based resin composition, excellent in injection moldability (or injection compression moldability), showing well-balanced properties (in terms of high rigidity, impact strength and surface hardness), excellent in resistance to weather, and, in particular, suitable for a variety of members for industrial devices, particularly interior members for automobiles.

The inventors of the present invention have found, after extensive studies to solve the above problems, that a propylene-based resin composition, prepared by compounding a specific propylene/ethylene copolymer with specific quantities of a specific ethylene/α-olefin copolymer rubber, specific hindered amine compound, and, as required, nucleating agent and specific talc, shows excellent injection moldability (or injection compression moldability), well-balanced properties (in terms of high rigidity, impact strength and surface hardness) and excellent resistance to weather, reaching the present invention.

Namely, the present invention provides a propylene-based resin composition, comprising (a) 100 wt.parts of a propylene/ethylene block copolymer comprising 60 to 78wt.% of a crystalline polypropylene homopolymer portion (Unit A) and 22 to 40wt.% of an ethylene/propylene random copolymer portion (Unit B), containing ethylene at 30 to 52 wt.% and having a weight-average molecular weight (Mw) of 230,000 to 600,000,
the whole composition (a) having a melt flow rate (MFR at 230°C and 2.16kg) of 25 to 40g/10min and number of 100 or less gels for gel size of 50µm or more in a molded article, 25cm² in area and 0.5mm in thickness,
(b) 1 to 8 wt.parts of an ethylene/α-olefin copolymer rubber, containing an α-olefin having a carbon number of 4 to 8 at 20 to 50wt.% and having an MFR (at 230°C and 2.16kg) of 0.5 to 15g/10min,
(c) 0.01 to 2 wt.parts of a hindered amine compound having a molecular weight of 450 or more,
(d) 0 to 2 wt.parts of a nucleating agent, and
(e) 0 to 6 wt.parts of talc having an average particle size of 1.5 to 15µm.

### [I] Propylene-based resin composition

### 1. Components

The propylene-based resin composition of the present invention comprises the following components (a) to (c), and, as required, components (d) and (e). Moreover, it may contain the component (f), depending on situations. Each of these components is described below.

### (1) Propylene/ethylene block copolymer [Component (a)]

### (i) Structure

The propylene/ethylene block copolymer as the component (a) for the present invention comprises
60 to 78wt.%, preferably 62 to 77wt.% and more preferably 65 to 76wt.%, of a crystalline polypropylene homopolymer portion (Unit A) obtained by polymerization of propylene, and
22 to 40wt.%, preferably 23 to 38wt.% and more preferably 24 to 35wt.%, of an ethylene/propylene random copolymer portion (Unit B) obtained by copolymerization of ethylene and propylene, containing ethylene at 30 to 52 wt.%, preferably 33 to 52wt.% and more preferably 34 to 50wt.%, and having a weight-average molecular weight (Mw) of 230,000 to 600,000, preferably 230,000 to 500,000 and more preferably 240,000 to 380,000,
the whole composition (a) having a melt flow rate (MFR at 230°C and 2.16kg) of 25 to 40g/10min, preferably 26 to 38g/10min and more preferably 27 to 37g/10min, and number of 100 or less gels, preferably 80 or less and more preferably 60 or less, for gel size of 50µm or more in a molded article, 25cm² in area and 0.5mm in thickness.

It is preferable that the crystalline propylene homopolymer portion (Unit A) has a density of 0.9071g/cm³ or more, more preferably 0.9081g/cm³ or more, for rigidity and other properties.

Content of the crystalline propylene homopolymer portion (Unit A) below the above range will cause insufficient rigidity of the resin composition and surface hardness of the molded article, and that beyond the above range will cause insufficient impact strength.

Content of the ethylene in the Unit B below the above range will cause insufficient surface hardness of the molded article , and that beyond the above range will cause insufficient impact strength.

Content of the ethylene/propylene random copolymer portion (Unit B) below the above range will cause insufficient impact strength, and that beyond the above range will cause insufficient rigidity of the resin composition and surface hardness of the molded article.

Weight-average molecular weight of the Unit B beyond the above range will cause formation of gel-like component to deteriorate outer appearance of the molded article greatly and impact strength (in particular dart impact strength), and that below the above range will cause insufficient surface hardness of the molded article.

MFR of the whole composition of the propylene/ethylene block copolymer below the above range will cause insufficient moldability, and that beyond the above range will cause insufficient impact strength.

Number of gels beyond the above range for gel size of 50µm or more in a molded article, 25cm² in area and 0.5mm in thickness will cause insufficient impact strength.

### (ii) Production

The propylene/ethylene block copolymer for the present invention is produced by slurry polymerization, vapor-phase polymerization or liquid-phase bulk polymerization in the presence of a catalyst of high stereoregularity . It may be produced either batchwise or continuously. It is preferable, for the sake of product quality, to produce the propylene/ethylene block copolymer by first forming the crystalline propylene homopolymer portion (Unit A) by polymerization of propylene, and then forming the ethylene/propylene random copolymer portion (Unit B) by random copolymerization of propylene and ethylene. For example, it can be produced by polymerization of propylene followed by random copolymerization of propylene and ethylene, where propylene is polymerized in the presence of a catalyst, comprising a solid component prepared by bringing titanium tetrachloride, a halide of organic acid and organosilicon compound into contact with magnesium chloride, with an organoaluminum compound.

The propylene/ethylene block copolymer can be incorporated with another type of unsaturated compound, e.g., α-olefin such as 1-butene, or vinyl ester or the like such as vinyl acetate to be a copolymer of three or more types of monomers, or mixed with such a copolymer, so long as the objectives of the present invention are not damaged.

The propylene/ethylene block copolymer may be pelletized or powdered, the latter being more preferable on balance in consideration of dispersion and the effects of the components (b), (c), (d) and (e).

MFR of the propylene/ethylene block copolymer can be adjusted by polymerization alone, or by the aid of a peroxide after polymerization. The peroxides useful for adjusting MFR include peroxides such as methylisobutylketone peroxide, dialkyl peroxides such as 1,3-bis (t-butylperoxy-isopropyl) benzene, hydroperoxides, percarbonates and peroxy esters.

### (iii) Analytical Procedures

Content of the Unit B in the propylene/ethylene block copolymer was determined by the following procedure: 2g of the sample was immersed and dissolved in 300g of boiling xylene for 20min and cooled to room temperature, to precipitate a solid phase which was filtered by a glass filter and dried, weight of the solid phase having being used for backward calculation of the content.

Ethylene content was determined by, e.g., infrared spectrometry.

Weight-average molecular weight of the Unit B was determined by gel permeation chromatographic analysis (GPC) of the filtrate passing through the glass filter above, after it was separately enriched and dried.

MFR was determined in accordance with JIS K-7210 (at 230°C and 2.16kg).

Number of gels was determined using an injection-molded specimen, 50 by 50 by 0.5mm in size; one side of the specimen was irradiated with light, and the image on the opposite side was taken by a stereoscopic microscope. The microscopic image was processed to separate and count the spots having an average size of 50µm or more.

### (2) Ethylene/α-olefin copolymer rubber [Component (b)]

Ethylene/α-olefin copolymer rubber as the component (b) for the present invention contains an α-olefin having a carbon number of 4 to 8 at 20 to 50wt.%, preferably 20 to 45wt.% and more preferably 20 to 40wt.%.

More concretely, the α-olefins useful for the present invention include 1-butene, 1-pentene, 4-methyl-pentene, 1-hexene, 1-heptene and 1-octene, of which 1-butene, 1-hexene and 1-octene are preferable, and 1-butene and 1-octene are more preferable.

The copolymer rubber may be a copolymer of 3 types of monomers, including a nonconjugate diene or the like as the third monomer. Content of the α-olefin outside of the above range is undesired; the content below the above range will cause insufficient impact strength, while that beyond the above range will cause insufficient rigidity and surface hardness.

The copolymer rubber is produced preferably in the presence of a vanadium compound-based or metallocene catalyst (disclosed by, e.g., WO-91/04257), the latter being more preferable.

Content of α-olefin was determined by the normal procedure, e.g., infrared spectral analysis and ¹³C-NMR. It should be noted that the former generally gives a smaller result than the latter by approximately 10 to 50%, more notably as density decreases.

MFR (at 230°C and 2.16kg) of the copolymer rubber is 0.5 to 15g/10min, preferably 0.6 to 13g/10min and more preferably 0.7 to 11g/10min. MFR outside the above range is undesirable; MFR below the above range will cause insufficient impact strength, while that beyond the above range will cause insufficient surface hardness.

### (3) Hindered amine compound having a molecular weight of 450 or more [Component (c)]

The hindered amine compounds having a molecular weight of 450 or more useful as the component (c) for the propylene-based resin composition of the present invention include a condensate of dimethyl succinate with 1-(2-hydroxyethyl)-4-hydroxy-2,2,6,6-tetramethylpiperidine; poly [ [6-(1,1,3,3-tetramethylbutyl)imino-1,3,5-triazine-2,4-diyl][(2,2,6,6-tetramethyl-4-piperidyl)imino]hexamethylene [(2,2,6,6-tetramethyl-4-piperidyl)imino]]; tetrakis(2,2,6,6-tetramethyl-4-piperidyl)1,2,3,4-butanetetracarboxylate; tetrakis(1,2,2,6,6-peniamethyl4-piperidyl)1,2,3,4-butanetetracarboxylate; poly[2-N,N'-bis(2,2,6,6-tetramethyl-4-piperidyl)hexamethylenediamine-4-(N-morpholino)symtriazine); bis(1,2,2,6,6-pentamethyl-4-piperidyl)sebacate; and bis-2,2,6,6-tetramethyl-4-piperidyl sebacate. Of these, more preferable ones are bis-2,2,6,6-tetramethyl-4-piperidyl sebacate; tetrakis(2,2,6,6-tetramethyl-4-piperidyl)1,2,3,4-butanetetracarboxylate; and tetrakis(1,2,2,6,6-pentamethyl-4-piperidyl)1,2,3,4-butanetetracarboxylate. Molecular weight of the hindered amine compound below 450 is undesirable, because of its tendency to bleeding and insufficient resistance to weather.

Use of a light stabilizer and ultraviolet absorber, e.g., those of benzoate, benzotriazole, benzophenone and formamidine, is acceptable or preferable because of its effect to further improve resistance to weather.

The benzoates useful for the present invention include 2,4-di-t-butylphenyl-3',5'-di-t-butyl-4'-hydroxybenzoate; and n-hexadecyl-3,5-di-t-butyl-4-hydroxybenzoate. The benzotriazoles and benzophenones useful for the present invention include 2-(2'-hydroxy-3'-t-butyl-5'-methylphenyl)-5-chlorobenzotriazole, and 2-hydroxy-4-n-octoxybenzophenone, respectively.

### (4) Nucleating agent [Component (d)]

The nucleating agents useful for the present invention as the component (d) include inorganic ones, such as talc, and organic ones, such as a metallic salt of aromatic carboxylic acid sorbitol-based compound, and metallic salt of aromatic phosphoric acid.

More concretely, the metallic salts of aromatic carboxylic acid include aluminum-mono-hydroxy-di-p-t-butyl benzoate and sodium benzoate. The sorbitol-based compounds include 1,3,2,4-di-benzylidene-sorbitol; 1,3,2,4-di-(p-methyl-benzylidene)sorbitol; 1,3,2,4-di-(p-ethyl-benzylidene)sorbitol; 1,3,2,4-di-(2',4'-di-methyl-benzylidene)sorbitol; 1,3-p-chloro-benzylidene-2,4-p-methylbenzylidene-sorbitol; and 1,3,2,4-di-(p-propyl-benzylidene)sorbitol. The metallic salts of aromatic phosphoric acid include sodiumbis(4-t-butylphenyl)phosphate; sodium-2,2'-methylene-bis-(4,6-di-t-butylphenyl)phosphate; and lithium-2,2'-methylene-bis-(4,6-di-t-butylphenyl)phosphate. Use of the nucleating agent is desirable, because of its effects to improve rigidity, hardness and the like.

### (5) Talc [Component (e)]

Talc as the component (e) for the propylene-based resin composition of the present invention has an average particle size of 1.5 to 15µm, preferably 1.5 to 10µm. Talc is useful for improving rigidity, and stabilizing and adjusting molded article dimensions. Moreover, it has an average aspect ratio of 4 or more, preferably 5 or more.

For production of talc, the ore is milled by an impact or micron mill, or more finely by a jet mill, and is then classified and adjusted by, e.g., a cyclone or micron separator. The ore is preferably produced in China, because of its low concentrations of metallic impurities.

Talc for the present invention may be surface-treated by a metallic salt, and may be compressed to have a specific volume of 2.50ml/g or less (the so-called compressed talc).

Average size of the talc particles was determined by a laser-aided, light-scattering type grain size analyzer. Horiba Seisakusho's Model LA-920 is a preferable analyzer for its measurement accuracy.

Diameter, length and aspect ratio of the talc particles are microscopically determined. Average size of the talc particles outside of the above range is undesirable; the particles tend to agglomerate with each other to deteriorate outer appearance of the particles at an average size below 1.5µm, while impact strength decreases at above 15µm.

### (6) Other components (optional) [Component (f)]

The propylene-based resin composition of the present invention may be incorporated with one or more of the following optional additives or components, in addition to the above components (a), (b), (c), (d) and (e), in a range not to damage the effects of the present invention, in order to further improve its functions.

More concretely, these additives or components useful for the present invention include a pigment for coloration, anti-oxidant, anti-static agent, flame-retardant, dispersant, various types of resin such as polyethylene, various types of rubber such as EPR, SEBS, SEP and SEPS, and various types of fillers such as calcium carbonate and mica. Of these, an anti-static agent (such as non-ionic or cationic one) is an effective additive to make the molded articles of the composition of the present invention anti-static.

More concretely, the anti-static agents useful for the present invention include those of polyoxyethylene alkyl ether, polyoxyethylene alkylphenyl ether, glycerine/fatty acid ester, alkyl diethanol amine, alkyl diethanol amide and alkyl diethanol amine ester.

### 2. Component concentrations

Concentration of each of the components (b), (c), (d) and (e) to be incorporated in the propylene-based resin composition of the present invention is expressed as wt. parts per 100wt. parts of the component (a).

### (1) Component (b): Ethylene/α-olefin copolymer rubber

Ethylene/α-olefin copolymer rubber as the component (b) is incorporated in the propylene-based resin composition at 1 to 8wt. parts, preferably 2 to 6wt. parts and more preferably 2 to 4wt. parts, per 100wt. parts of the component (a).

The ratio outside of the above range is undesirable; insufficient impact strength will result at below 1wt. parts, while insufficient hardness, rigidity and injection moldability will result at beyond the above range.

### (2) Component (c): Hindered amine compound having a molecular weight of 450 or more

Hindered amine compound having a molecular weight of 450 or more as the component (c) is incorporated in the propylene-based resin composition at 0.01 to 2wt. parts, preferably 0.05 to 0.5wt. parts and more preferably 0.05 to 0.3wt. parts, per 100wt. parts of the component (a).

The ratio outside of the above range is undesirable; insufficient resistance to weather will result at below 0.01wt. parts, while the composition will tend to bleed to deteriorate its outer appearance at beyond the above range.

### (3) Component (d): Nucleating agent

A nucleating agent as the component (d) is incorporated in the propylene-based resin composition at 0 to 2wt. parts, preferably 0.05 to 1.0wt. parts and more preferably 0.10 to 0.6wt. parts, per 100wt. parts of the component (a).

The ratio outside of the above range is undesirable, because of insufficient moldability anticipated.

### (4) Component (e): Talc

Talc as the component (e) is incorporated in the propylene-based resin composition at 0 to 6wt. parts, preferably 1 to 5wt. parts and more preferably 2 to 4wt. parts, per 100wt. parts of the component (a).

The ratio outside of the above range is undesirable, because of insufficient impact strength, outer appearance of the molded article and moldability anticipated.

### 3. Production of the propylene-based resin composition

### (1) Kneading/granulation

The propylene-based resin composition of the present invention can be produced by kneading/granulating a mixture of given quantities of the components (a) to (c), the components (d) and (e) as required, and the component (f) depending on situations, using a common kneading machine, e.g., monoaxial extruder, biaxial extruder, Banbury mixer, roll mixer, brabender plastograph or kneader.

It is preferable to adopt a kneading/granulation method which can finely disperse each component, and a biaxial extruder is a common-choise for kneading/granulation. This process can be effected in one stage in which the components (a) to (c), the components (d) and (e) as required, and the component (f) depending on situations are simultaneously kneaded, or in two or more stages to improve functions of the resin composition, in which, e.g., the component (a) is kneaded with part or whole of the component (b), and then kneaded/granulated with the remainder.

### (2) Molding of the propylene-based resin composition

The propylene-based resin composition thus produced can be formed into various shapes by injection molding (including gas injection molding) or injection compression molding (pressed injection).

### [II] Properties of the propylene-based resin composition

The propylene-based resin composition of the present invention thus produced can exhibit the following properties; good injection moldability or injection compression moldability with MFR (at 230°C and 2.16kg) controlled at 20g/10min or more, preferably 23g/10min or more and more preferably 26g/10min or more; bending modulus of elasticity of 900Mpa or more, preferably 1000Mpa or more and more preferably 1100Mpa or more; Izod impact strength (at 20°C) of 20KJ/m² or more, preferably 25KJ/m² or more and more preferably 30KJ/m² or more with a notched specimen; Rockwell surface hardness of the molded article of 65 or more, preferably 70 or more and more preferably 75 or more; and good resistance to weather of 1000hrs or more, as determined by a fade meter (at 83°C, no rain).

### [III] Applicable areas of the propylene-based resin composition

The propylene-based resin composition of the present invention can go into various areas with the above favorable properties, e.g., a variety of molded members for industrial devices, such as daily necessities, automobiles and home electric/electronic appliances, in particular for automobiles, particularly molded members for interiors, such as trims, center pillars, door trims, instrument panels and consoles.

### EXAMPLES

The propylene-based resin composition of the present invention is described in detail by EXAMPLES more concretely, which by no means limit the present invention.

### [I] Raw stocks

The raw stocks used for EXAMPLES and COMPARATIVE EXAMPLES are described below

### (1) Component (a) (Each of the stocks below described contained an anti-oxidant, and dry-blended for the powdery product)

a-1: Pelletized propylene/ethylene block copolymer, produced by vapor-phase polymerization, comprising 75wt.% of Unit A having a density of 0.9091g/cm³ and 25wt.% of Unit B containing ethylene at 39wt.%, having a weight-average molecular weight of 380,000 and 32 gels for gel size of 50µm or more, the whole composition (a) having an MFR of 30g/10min.
a-2: Powdered composition of a-1 above.
a-3: Pelletized propylene/ethylene block copolymer, produced by vapor-phase polymerization, comprising 75wt.% of Unit A having a density of 0.9091g/cm³ and 25wt.% of Unit B containing ethylene at 39wt.%, having a weight-average molecular weight of 360,000 and 10 gels for gel size of 50µm or more, the whole composition (a) having an MFR of 32g/10min.
a-4: Pelletized propylene/ethylene block copolymer, produced by vapor-phase polymerization, comprising 75wt.% of Unit A having a density of 0.9091g/cm³ and 25wt.% of Unit B containing ethylene at 39wt.%, having a weight-average molecular weight of 620,000 and 250 gels or more for gel size of 50µm or more, the whole composition (a) having an MFR of 30g/10min.
a-5: Pelletized propylene/ethylene block copolymer, produced by vapor-phase polymerization, comprising 85wt.% of Unit A having a density of 0.9092g/cm³ and 15wt.% of Unit B containing ethylene at 41wt.%, having a weight-average molecular weight of 190,000 and 7 gels for gel size of 50µm or more, the whole composition (a) having an MFR of 28g/10min.

### (2) Component (b) (Each of the raw stocks described below was pelletized)

b-1: Ethylene/1-butene copolymer rubber, produced by solution polymerization in the presence of a metallocene catalyst, containing 1-butene at 31.4wt.% (determined by infrared method), and having an MFR of 4.0g/10min and density of 0.862g/cm³.
b-2: Ethylene/1-octene copolymer rubber, produced by solution polymerization in the presence of a metallocene catalyst, containing 1-octene at 24.3wt.% (determined by infrared method), and having an MFR of 1.2g/10min and density of 0.870g/cm³.
b-3: Ethylene/1-butene copolymer rubber, produced by solution polymerization in the presence of a vanadium catalyst, containing 1-butene at 33.5wt.% (determined by infrared method), and having an MFR of 12.2g/10min and density of 0.862g/cm³.

### (3) Component (c)

c-1: Bis-2,2,6,6-tetramethyl-4-piperidyl sebacate
c-2: Tetrakis(2,2,6,6-tetramethyl-4-piperidyl)1,2,3,4-butanetetracarboxylate
c-3: A mixture of 2 parts of tetrakis(2,2,6,6-tetramethyl-4-piperidyl)1,2,3,4-butanetetracarboxylate and 1 part of 2,4-di-t-butylphenyl-3',5'-di-t-butyl-4'-hydroxybenzoate
c-4: 4-benzoyloxy-2,2,6,6-tetramethylpiperidine

### (4) Component (d)

d-1: Talc having an average particle size of 9.8µm
d-2: Aluminum-mono-hydroxy-di-p-t-butylbenzoate
d-3: Sodium-2,2'-methylene-bis-(4,6-di-t-butylphenyl)phosphate

### (5) Component (e)

e-1: Talc having an average particle size of 5.3µm and average aspect ratio of 6

### [II] Analytical procedures

The properties were determined by the following procedures.
(1) MFR: Determined in accordance with JIS K-7210 at 230°C and a load of 2.16kg.
(2) Bending modulus of elasticity: Determined in accordance with JIS K-7203. This modulus is used as a measure for resistance to heat.
(3) Izod impact strength: Determined in accordance with JIS K-7110 at 23°C, using a notched specimen.
(4) Rockwell hardness: Determined in accordance with JIS K-7202, on an R scale, at 23°C.
(5) Resistance to weather: An injection-molded sheet, 50 by 50 by 3mm in size, was irradiated with light by a fade meter (Suga Shikenki) for 1000hrs at 83°C with no rain. The weathered specimen was observed for microcracks, discoloration, bleeding and so on, and judged to be good when no abnormality described above is found, and to be defective when one of the above abnormalities is found. The sheet was injection-molded while dry-blended with 1.5wt. parts of a black-colored master batch, to facilitate observation of the surface conditions.

### EXAMPLES 1 to 9, and COMPARATIVE EXAMPLES 1 to 5

Mixed compositions with the components (a), (b), (c), (d) and (e), shown in Table 1, were sufficiently mixed by a tumbler mixer (except for the one prepared by COMPARATIVE EXAMPLE 1).

Each mixture thus prepared was kneaded/granulated by a high-speed, biaxial extruder (Kobe Steel, KCM) into pellets (polymer pellets by EXAMPLE 1), which were injection-molded into a test specimen sheet. It was assessed for the above properties, and the results are given in Table 2.

As shown in Table 2, each of the resin compositions prepared by EXAMPLES 1 through 9 exhibits good fluidity (injection moldability), well-balanced rigidity, impact strength and hardness, and sufficiently practical resistance to weather. On the other hand, those prepared by COMPARATIVE EXAMPLES 1 to 5 exhibit insufficiently balanced properties.

The resin composition prepared by EXAMPLE 4 was injection molded into an automobile door trim, 1090 by 550 by 2.0mm in size by a molder (The Japan Steel Works,LTD, J4000EV) under the conditions of molding temperature: 220°C, mold temperature: 40°C and injection pressure: 800kg/cm². The resin exhibits good moldability, and the molded article exhibits good outer appearance, sufficiently practical, well-balanced mechanical properties and resistance to weather, and also good resistance to scratching and durability.

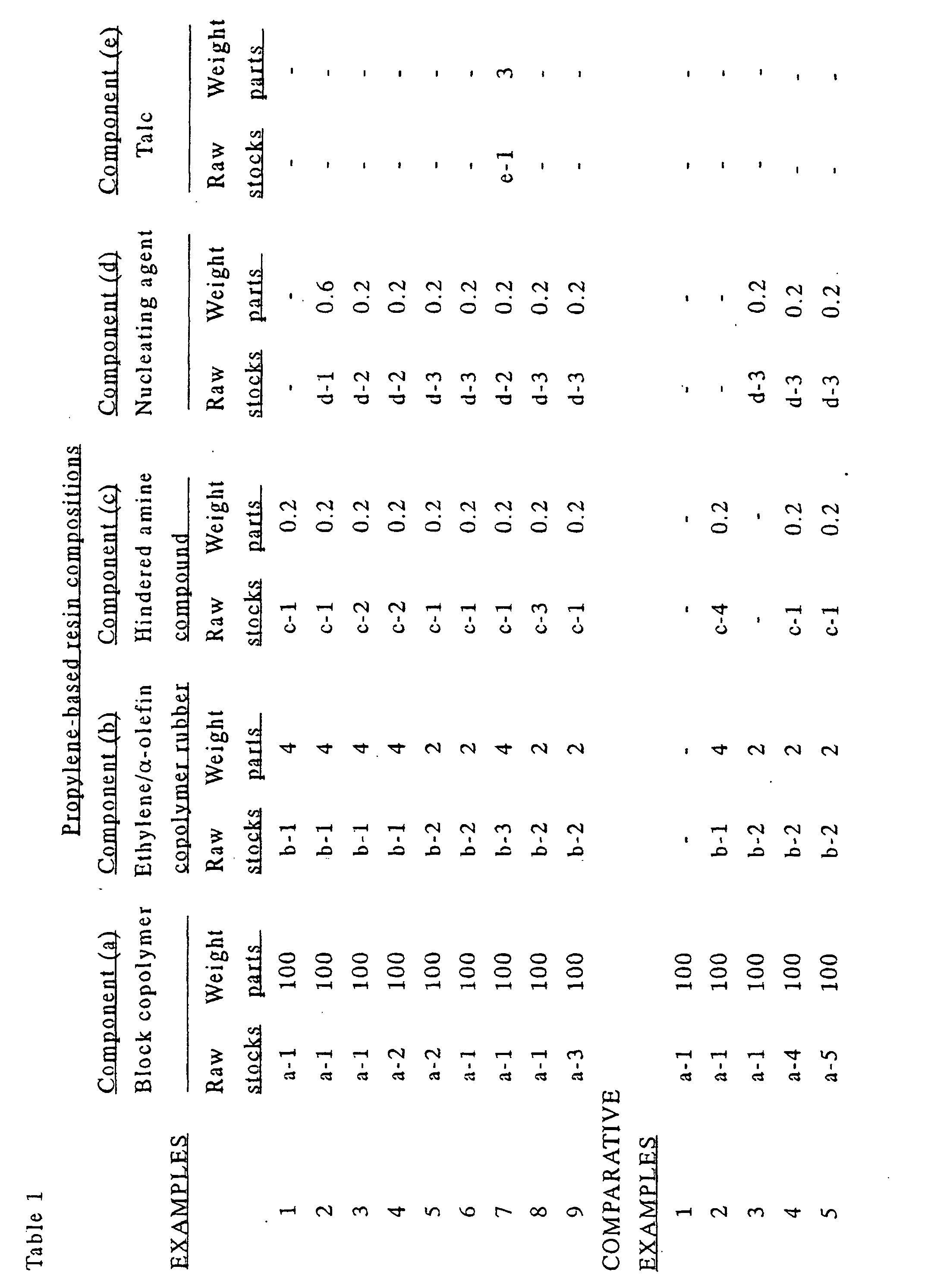

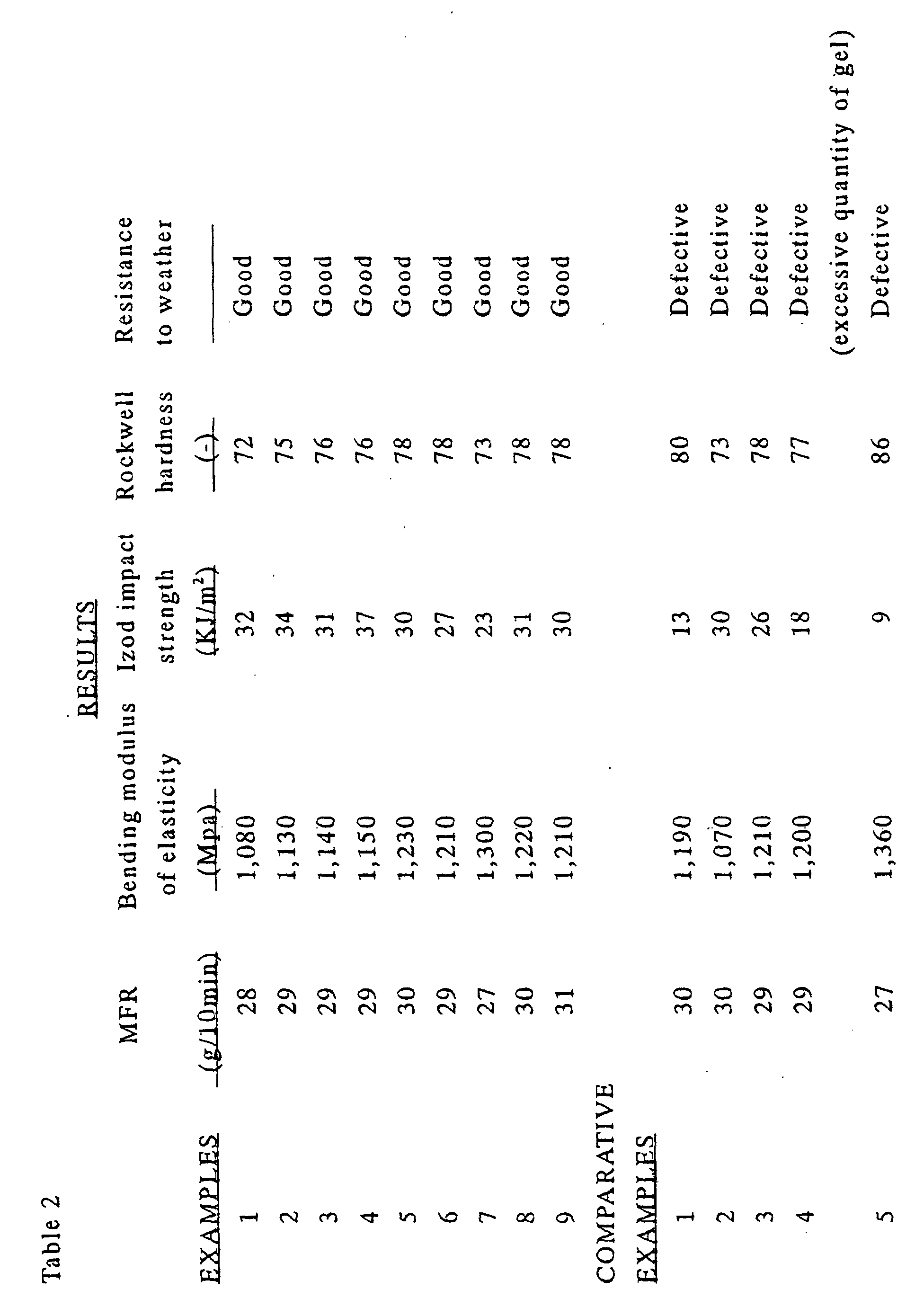

The propylene-based resin composition of the present invention exhibits good injection moldability, well-balanced rigidity, impact strength and hardness, sufficiently practical resistance to weather, and good resistance to scratching, making it applicable to a variety of molded members for industrial devices, such as daily necessities, automobiles and home electric/electronic appliances, in particular for automobiles, particularly molded members for interiors, such as trims, center pillars, door trims and instrument panels.

## Claims

1. A propylene-based resin composition, comprising the following components (a) to (e):
(a) 100 wt.parts of a propylene/ethylene block copolymer comprising 60 to 78 wt.% of a crystalline polypropylene homopolymer portion (Unit A) and 22 to 40 wt.% of an ethylene/propylene random copolymer portion (Unit B), containing ethylene at 30 to 52 wt.% and having a weight-average molecular weight (Mw) of 230,000 to 600,000,
the whole composition (a) having a melt flow rate (MFR at 230°C and 2.16kg) of 25 to 40g/10min and number of 100 or less gels for gel size of 50µm or more in a molded article, 25cm² in area and 0.5 mm in thickness, wherein the number of gels is determined by using an injection-molded specimen, 50 by 50 by 0.5mm in size, wherein one side of the specimen is irradiated with light, and the image on the opposite side is taken by a stereoscopic microscope and the microscopic image is processed to separate and count the spots having an average size of 50µm or more,
(b) 1 to 8 wt.parts of an ethylene/α-olefin copolymer rubber, containing an α-olefin having a carbon number of 4 to 8 at 20 to 50 wt.% and having a MFR (at 230°C and 2.16kg) of 0.5 to 15g/10 min,
(c) 0.01 to 2 wt.parts of a hindered amine compound having a molecular weight of 450 or more,
(d) 0 to 2 wt.parts of a nucleating agent, and
(e) 0 to 6 wt.parts of talc having an average particle size of 1.5 to 15 µm.

2. The propylene-based resin composition of claim 1, wherein the component (a) is powdery.

3. The propylene-based resin composition of claim 1 or 2, having a MFR (at 230°C and 2.16 kg) of 20g/10min or more, bending modulus of elasticity of 900Mpa or more, Izod impact strength (at 20°C) of 20KJ/m² or more, and Rockwell hardness of 65 or more.

4. The propylene-based resin composition of claim 1, 2 or 3, having a resistance to weather of 1000h or more, as determined by a fade meter (at 83°C, no rain).

5. An interior member of a propylene-based resin composition of claim 1, 2, 3 or 4 for automobiles, molded by injection molding or injection compression molding.

## Patentansprüche

1. Harzzusammensetzung auf Propylenbasis, umfassend die folgenden Komponenten (a) bis (e):
(a) 100 Gew.-Teile eines Propylen/Ethylenblockcopolymers, umfassend 60 bis 78 Gew.-% eines kristallinen Polypropylenhomopolymeranteils (Einheit A) und 22 bis 40 Gew.-% eines statistischen Ethylen/Propylencopolymeranteils (Einheit B), welche 30 bis 52 Gew.-% Ethylen enthält und ein gewichtsmittleres Molekulargewicht (Mw) von 230.000 bis 600.000 aufweist,
wobei die gesamte Zusammensetzung (a) einen Schmelzindex (MFR bei 230°C und 2,16 kg) von 25 bis 40 g/10 min und eine Zahl von 100 oder weniger Gele mit einer Gelgröße von 50 µm oder mehr in einem geformten Gegenstand mit einer Fläche von 25 cm² und einer Dicke von 0,5 mm aufweist, wobei die Zahl der Gele unter Verwendung einer Spritzgußprobe mit einer Größe von 50 mal 50 mal 0,5 mm bestimmt wird, wobei eine Seite der Probe mit Licht bestrahlt wird und das Bild auf der gegenüberliegenden Seite durch ein stereoskopisches Mikroskop aufgenommen wird und das mikroskopische Bild verarbeitet wird, um Punkte mit einer Durchschnittsgröße von 50 µm oder mehr zu trennen und zu zählen,
(b) 1 bis 8 Gew.-Teile eines Ethylen/α-Olefincopolymerkautschuks, welcher ein α-Olefin mit einer Kohlenstoffzahl von 4 bis 8 zu 20 bis 50 Gew.-% enthält, und einen MFR (bei 230°C und 2,16 kg) von 0,5 bis 15 g/10 min aufweist,
(c) 0,01 bis 2 Gew.-Teile einer gehinderten Aminverbindung mit einem Molekulargewicht von 450 oder mehr,
(d) 0 bis 2 Gew.-Teile eines Keimbildungsmittels, und
(e) 0 bis 6 Gew.-Teile Talk mit einer durchschnittlichen Teilchengröße von 1,5 bis 15 µm.

2. Harzzusammensetzung auf Propylenbasis nach Anspruch 1, wobei die Komponente (a) pulvrig ist.

3. Harzzusammensetzung auf Propylenbasis nach Anspruch 1 oder 2, welche einen MFR (bei 230°C und 2,16 kg) von 20 g/10 min oder mehr, einen elastischen Biegemodul von 900 MPa oder mehr, eine Izod-Schlagzähigkeit (bei 20°C) von 20 KJ/m² oder mehr und eine Rockwell-Härte von 65 oder mehr aufweist.

4. Harzzusammensetzung auf Propylenbasis nach Anspruch 1, 2 oder 3, welche eine Wetterbeständigkeit von 1.000 h oder mehr, wie durch einen Lichtechtheitsprüfer (bei 83°C ohne Regen) bestimmt, aufweist.

5. Innenteil für Fahrzeuge aus einer Harzzusammensetzung auf Propylenbasis nach Anspruch 1, 2, 3 oder 4, welches durch Spritzguß oder Spritzdruckguß geformt ist.

## Revendications

1. Composition de résine à base de propylène, comprenant les constituants (a) à (e) suivants :
(a) 100 parties en poids d'un copolymère séquencé propylène/éthylène comprenant 60 à 78% en poids d'une partie homopolymère de propylène cristallin (motif A) et 22 à 40% en poids d'une partie copolymère et statistique éthylène/propylène (motif B), contenant de l'éthylène en une quantité de 30 à 52% en poids et ayant une moyenne en poids du poids moléculaire (Mw) de 230 000 à 600 000,
la composition totale (a) ayant une vitesse d'écoulement en masse fondue (MFR à 230°C et 2,16 kg) de 25 à 40 g/10 min et un nombre de gels égal ou inférieur à 100 pour des dimensions de gels égales ou supérieures à 50 µm dans un article clos moulé, de 25 cm² de surface et 0,5 mm d'épaisseur, le nombre de gels étant déterminé en utilisant un échantillon moulé par injection, ayant des dimensions de 50 x 50 x 0,5 mm, une face de l'échantillon étant irradiée avec de la lumière, et l'image sur la face opposée étant prise par un microscope stéréoscopique et l'image microscopique étant traitée pour séparer et compter les taches ayant un diamètre moyen égal ou supérieur à 50 µm,
(b) 1 à 8 parties en poids d'un caoutchouc copolymère éthylène/α-oléfine, contenant une α-oléfine ayant un nombre d'atomes de carbone de 4 à 8 en une quantité de 20 à 50% en poids et ayant une valeur de MFR (à 230°C et 2,16 kg) de 0,5 à 15 g/10 min,
(c) 0,01 à 2 parties en poids d'une amine à encombrement stérique ayant un poids moléculaire égal ou supérieur à 450,
(d) 0 à 2 parties en poids d'un agent de nucléation, et
(e) 0 à 6 parties en poids de talc ayant un diamètre moyen de particule de 1,5 à 15 µm.

2. Composition de résine à base de propylène suivant la revendication 1, dans laquelle le constituant (a) est pulvérulent.

3. Composition de résine à base de propylène suivant la revendication 1 ou 2, ayant une valeur de MFR (à 230°C et 2,16 kg) égale ou supérieure à 20 g/10 min, un module d'élasticité en flexion égal ou supérieur à 900 Mpa, une résistance aux chocs Izod (à 20°C) égale ou supérieure à 20 KJ/m² et une dureté Rockwell égale ou supérieure à 65.

4. Composition de résine à base de propylène suivant la revendication 1, 2 ou 3, ayant une résistance aux conditions atmosphériques égale ou supérieure à 1000 h, de la manière déterminée par un appareil de mesure de résistance aux conditions atmosphériques (à 83°C, sans pluie).

5. Elément intérieur d'une composition constitué d'une composition de résine à base de propylène suivant la revendication 1, 2, 3 ou 4 pour automobiles, moulé par moulage par injection ou moulage par injection et compression.
